# EUROPÄISCHE PATENTANMELDUNG

(11) **EP 4 794 068 A1**
(43) Veröffentlichungstag der Anmeldung: **19.08.2026**
(21) Anmeldenummer: 26156792.9
(22) Anmeldetag: 06.02.2026
(51) Int. Cl.: H01M 50/103, H01M 50/119

(54) **HALBZEUG ZUM AUSBILDEN EINES GEHÄUSEELEMENTS EINER ZELLEINHEIT**

(30) Priorität: 12.02.2025 DE 102025105104
(71) Anmelder: Carl Freudenberg KG, 69469 Weinheim (DE)
(72) Erfinder: SCHMIDT, Wilhelm, 64646 Heppenheim (DE)

(57) **Zusammenfassung**

Halbzeug zum Ausbilden eines Gehäuseelements (100) einer Zelleinheit (200), aufweisend: ein Grundelement (12) und ein erstes Seitenelement (14), ein zweites Seitenelement (16), und ein drittes Seitenelement (18), wobei das erste Seitenelement (14) und das zweite Seitenelement (16) am Grundelement (12) an einander gegenüberliegenden Seiten angeordnet sind, und das dritte Seitenelement (18) am zweiten Seitenelement (16) an einer zum Grundelement (12) gegenüberliegenden Seite angeordnet ist, wobei das Grundelement (12), das erste Seitenelement (14), das zweite Seitenelement (16) und das dritte Seitenelement (18) in einer Ebene (23) angeordnet sind und wobei das Grundelement (12), das erste Seitenelement (14), das zweite Seitenelement (16) und das dritte Seitenelement (18) eingerichtet sind, einen umfänglich geschlossenen, fluiddichten Hauptkörper zu bilden, in welchem ein Zellelement (302) der Zelleinheit anordenbar ist.

## Beschreibung

Die vorliegende Erfindung betrifft ein Halbzeug zum Ausbilden eines Gehäuseelements einer Zelleinheit eines elektrischen Energiespeichers, ein Verfahren zum Ausbilden eines Gehäuseelements, ein Verfahren zum Ausbilden eines Halbzeugs, ein Gehäuseelement sowie ein Fahrzeug und/oder stationären Speicher.

Derzeit bestehen eine Vielzahl von unterschiedlichen Lösungen zum Ausbilden von Gehäuseelementen in der Zelltechnik. Durch die zunehmende Anzahl an Zelleinheiten im Fahrzeug als auch im stationären Bereich und die erhöhten Leistungs- als auch Qualitätsanforderungen steigt kontinuierlich der Bedarf an innovativen und robusten Zellsystemen.

Die stetige Effizienzsteigerung in der Fahrzeugtechnik zur Verbrauchsverringerung sowie der zunehmende Wettbewerb sorgt für Kostendruck, so dass günstigere und effizientere Komponenten für Fahrzeuge stärk nachgefragt werden.

Es ist daher Aufgabe der vorliegenden Erfindung, ein Halbzeug zum Ausbilden eines Gehäuseelements einer Zelleinheit eines elektrischen Energiespeichers sowie ein Verfahren zum Herstellen eines Gehäuseelements einer Zelleinheit bereitzustellen, welche eine einfache und kostengünstigere Herstellbarkeit bei einer einfacheren Transportmöglichkeit aufweist.

Mit Ausführungsformen der Erfindung kann vorteilhafterweise ein verbessertes Halbzeug zum Ausbilden eines Gehäuseelements einer Zelleinheit bereitgestellt werden. Die Erfindung ist in den unabhängigen Ansprüchen definiert. Vorteilhafte Weiterbildungen der Erfindung ergeben sich aus den abhängigen Ansprüchen und der nachfolgenden Beschreibung.

Ein Vorteil des Halbzeugs zum Ausbilden eines Gehäuseelements einer Zelleinheit mit den Merkmalen des Anspruchs 1 ist, dass der Transport des Gehäuseelementes deutlich vereinfacht wird und zusätzlich neue Lieferketten ermöglicht werden. Dabei kann insbesondere das Halbzeug bereits für die jeweilige Zelleinheit spezifisch ausgebildet werden, wobei das Halbzeug sich flach auf einer Ebene befindet. Durch die flache Anordnung kann es einfach und weltweit transportiert werden, im Gegensatz zu bereits gefügten Gehäuseelementen. Das Fügen des Halbzeuges zum Ausbilden des Gehäuseelementes kann dabei bevorzugt in der Einrichtung stattfinden, in welcher ein Zellelement, z.B. Membrane, Bipolarplatten, Isolatoren, etc., in das Gehäuseelement integriert wird. Weiter bevorzugt kann durch das Anpassen der Abmaße des Halbzeuges dieses einfacher an neue Zellgrößen als auch an neue Zellkonzepte angepasst werden. Somit können insbesondere die Kosten für die Ausbildung von Werkzeugen zum Bereitstellen von Gehäuseelementen deutlich gesenkt beziehungsweise vermieden werden.

Dies wird erfindungsgemäß dadurch erreicht, dass das Halbzeug zum Ausbilden eines Gehäuseelements einer Zelleinheit ein Grundelement, ein erstes Seitenelement, ein zweites Seitenelement und ein drittes Seitenelement aufweist. Das erste Seitenelement und das zweite Seitenelement sind am Grundelement an einander gegenüberliegenden Seiten angeordnet. Das dritte Seitenelement ist am zweiten Seitenelement an einer dem Grundelement gegenüberliegenden Seite des zweiten Seitenelements angeordnet. Dabei sind das erste, das zweite und das dritte Seitenelement sowie das Grundelement in einer Ebene angeordnet. Hierbei sind das Grundelement, das erste, zweite und dritte Seitenelement eingerichtet, einen umfänglich geschlossenen, fluiddichten Hauptkörper des Gehäuseelements zu bilden. In dem Hauptkörper ist ein Zellelement der Zelleinheit anordenbar.

Somit bilden die vier Flächenelemente, nämlich das Grundelement und die drei Seitenelemente ein Halbzeug, aus dem dann bspw. bei einem Kunden ein hohlkörperartiges Gehäuseelement mit zwei einander gegenüberliegenden Öffnungen hergestellt werden kann. Beim Kunden werden dann die beiden Öffnungen einerseits mit einem Bodenelement und andererseits mit einem Deckelelement zu einem geschlossenen Gehäuse montiert. Vor dem Verschließen des Gehäuses mit dem Deckelelement werden vorzugsweise die Zellelemente eingebracht. Nach dem Verschließen mit dem Deckelelement erfolgt dann eine Befüllung der Zelleinheit mit einem Elektrolyten über eine Befüllöffnung, die in einer der Wände vorgesehen sein kann, vorzugsweise im Deckelelement.

Es sei angemerkt, dass das Zellelement bevorzugt auch vor einem Fügevorgang des Halbzeugs bspw. auf das Grundelement aufgelegt und ausgerichtet werden kann und anschließend der Hohlkörper um das Zellelement herum durch Umformvorgänge hergestellt wird. Anschließend werden dann das Bodenelement und das Deckelelement auf den Hohlkörper aufgebracht. Weiter alternativ ist es auch möglich, zuerst den Hohlkörper durch Umformen zu bilden und dann das Bodenelement zu befestigen und dann das Zellelement in den so einseitig offenen Hohlkörper einzubringen und in einem letzten Schritt dann den Deckel auf der noch einzig verbliebenen Öffnung anzuordnen.

Es sei angemerkt, dass der Hohlkörper nach dem Umformen bspw. mittels einer Schweißung entlang einer Kontaktnaht zwischen dem ersten und dem dritten Seitenelement hergestellt werden kann und das Bodenelement und/oder das Deckelelement ebenfalls mittels Schweißverbindungen an den Hohlkörper fixiert werden kann.

In anderen Worten kann aus einem Blechrohling oder ähnlichem das Halbzeug mit dem Grundelement, dem ersten Seitenelement, dem zweiten Seitenelement und dem dritten Seitenelement ausgeschnitten werden, so dass diese einstückig und/oder einteilig in einer Ebene sind. Bevorzugt kann das erste Seitenelement, das zweite Seitenelement und das dritte Seitenelement, derart zum Grundelement angeordnet werden, dass ein fluiddichter Raum entstehen kann, in welchem bevorzugt ein Zellelement einer Zelleinheit, wie beispielsweise ein Elektroden-Stack oder ähnliches, angeordnet werden kann.

Die Unteransprüche zeigen bevorzugte Weiterbildungen der Erfindung.

Weiter bevorzugt umfasst das Halbzeug ferner ein Bodenelement, welches am Grundelement angeordnet ist. Das Grundelement, das erste, zweite, dritte Seitenelement und das Bodenelement sind eingerichtet, einen fluiddichten Raum auszubilden, in dem das Zellelement der Zelleinheit anordenbar ist. Das Bodenelement ist dabei direkt am Grundelement angeordnet. Somit sind das Bodenelement, das erste und das zweite Seitenelement direkt am Grundelement angeordnet und das dritte Seitenelement ist am zweiten Seitenelement angeordnet. Dadurch kann ein Hohlkörper mit Bodenelement durch Umformen und Fixieren der Flächenelemente an den Nahtstellen hergestellt werden, in welches dann das Zellelement eingebracht wird oder das Zellelement wird vor dem Umformen auf dem Grundelement angeordnet und anschließend die weiteren Flächenelemente um das angeordnete Zellelement herum umgeformt, um den einseitig offenen, fluiddichten Hohlkörper herzustellen. In einem letzten Schritt wird dann ein separates Deckelelement aufgebracht und eine Befüllung mit Elektrolyt durchgeführt.

Weiter bevorzugt umfasst das Halbzeug ferner ein Deckelelement, welches am Grundelement gegenüber dem Bodenelement angeordnet ist. Somit sind am Grundelement vier Flächenelemente, nämlich das Deckelelement, das Bodenelement und das erste und zweite Seitenelement angeordnet. Insgesamt umfasst das Halbzeug somit sechs Flächenelemente, welche dann zu einem fluiddichten, quaderförmigen Hohlkörper als Gehäuse für eine Zelleinheit umgeformt und die Kontaktseiten miteinander verbunden werden können.

Bevorzugt ist zwischen einander benachbarten Flächenelementen jeweils eine Biegelinie angeordnet. Die Biegelinie ist insbesondere zwischen dem Grundelement und dem ersten Seitenelement und/oder dem Grundelement und dem zweiten Seitenelement und/oder dem zweiten Seitenelement und dem dritten Seitenelement und/oder dem Grundelement und dem Bodenelement und/oder dem Grundelement und dem Deckelelement angeordnet. Die Biegelinie ist vorzugsweise eine Prägelinie und wird in das flache Halbzeug vor dem Umformen bei der Herstellung des Halbzeugs eingebracht.

Ein Vorteil dieser Ausführungsform ist, dass das Fügen der jeweiligen Komponenten des Halbzeuges deutlich vereinfacht wird und insbesondere Positionstoleranzen verbessert werden können.

Vorzugsweise ist in eines der Flächenelemente, insbesondere im ersten Seitenelement, im zweiten Seitenelement, im dritten Seitenelement, und/oder dem Grundelement und/oder dem Deckelelement ein Kontaktierungselement angeordnet, welches dazu eingerichtet ist, elektrische Energie von einer Innenseite des im Wesentlichen fluiddichten Raums an eine Außenseite des Gehäuseelements zu leiten.

Ein Vorteil dieser Ausführungsform ist, dass das Kontaktierungselement bereits in das Halbzeug in der Ebene eingebracht werden kann, da dies deutlich einfacher ist, als in einem montierten Zustand des Gehäuseelements.

Weiter bevorzugt weist das Grundelement, das erste Seitenelement, das zweite Seitenelement, das dritte Seitenelement, das Bodenelement und/oder das Deckelelement ein Berstelement auf, welches dazu eingerichtet ist, einen Abfluss eines Fluids aus dem im Wesentlichen fluiddichten Raum freizugeben, wenn eine vorbestimmte Temperatur und/oder ein vorbestimmter Druck im Gehäuseelement überschritten wird.

Ein Vorteil dieser Ausführungsform ist, dass eine Wahrscheinlichkeit zur Beschädigung des Berstelementes bei der Montage in einer Ebene deutlich reduziert wird, da in der Ebene das Element viel einfacher eingesetzt werden kann als in einem montierten Zustand des Gehäuseelements.

Die Flächenelemente, d.h. das erste Seitenelement und/oder das zweite Seitenelement und/oder das dritte Seitenelement und/oder das Grundelement und/oder das Bodenelement und/oder das Deckelelement weisen bevorzugt eine rechteckige Form auf, sodass das hergestellte Gehäuseelement dann eine Quaderform aufweist.

Ein weiterer Aspekt der Erfindung betrifft ein Verfahren zum Ausbilden eines Gehäuseelements mittels eines Halbzeugs, wie voranstehend und nachfolgend beschrieben, aufweisend die Schritte:
- Bereitstellen des Halbzeugs mit einem Grundelement, einem ersten Seitenelement, einem zweiten Seitenelement, und einem dritten Seitenelement,
- Ausrichten des ersten Seitenelements, des zweiten Seitenelements und des dritten Seitenelements zum Grundelement,
- Fügen des ersten Seitenelements mit dem dritten Seitenelement, und sodass ein Hohlquader mit zwei einander gegenüberliegenden Öffnungen hergestellt wird.

Ein Vorteil dieser Ausführungsform ist, dass durch den Aufbau des Halbzeuges als auch durch die Prozessschritte das Gehäuseelement an verschiedene Zelleinheiten und/oder Zellelemente gezielt angepasst werden kann. Bevorzugt kann es sich bei dem Ausrichten um einen Biege- oder ähnlichen Vorgang handeln. Ferner kann es sich bei dem Fügen insbesondere um eine Schweißvorgang oder ähnliches handeln.

Weiter bevorzugt werden dann an den beidseitig geöffneten Hohlquader ein Bodenelement und/oder ein Deckelelement angefügt, welche separate Bauteile sind.

Weiter bevorzugt weist das Halbzeug ferner noch ein Bodenelement auf, welches am Grundelement angeordnet ist. Somit kann durch Umformen und Fügen dieses Halbzeugs ein Hohlquader hergestellt werden, welcher nur noch einseitig offen ist. Die offene Seite kann dann mittels eines separaten Deckelelements verschlossen werden.

Gemäß einer weiteren bevorzugten Ausgestaltung der Erfindung umfasst das Halbzeug ferner auch ein Deckelelement. Das Deckelelement ist auch am Grundelement angeordnet. Am Grundelement sind somit das erste und zweite Seitenelement, das Bodenelement und das Deckelelement jeweils an einer Seite angeordnet. Dadurch kann das Gehäuseelement vollständig ohne separates zusätzliches Flächenelement, d.h. ein separates Bodenelement und/oder ein separates Deckelelement hergestellt werden.

Die Zellelemente als innere Bauteile der Zelleinheit können auf unterschiedliche Arten in das Gehäuseelement eingebracht werden. Vorzugsweise wird das Zellelement in den ungeformten und gefügten Hohlquader eingebracht, bevor das Bodenelement und/oder das Deckelelement fixiert werden.

Bevorzugt wird, wenn das Halbzeug einen an zwei Seiten offenen Hohlkörper bereitstellt, zuerst das Zellelement in den Hohlkörper eingebracht und anschließend das Bodenelement und das Deckelelement an den Hohlkörper fixiert. Alternativ kann auch zuerst das Bodenelement am Hohlkörper fixiert werden und dann erst das Zellelement in den einseitig offenen Hohlkörper eingebracht werden. In einem letzten Schritt erfolgt dann ein Fügen des Deckelelements. Alternativ kann das Zellelement auch auf den flachen Rohling aufgelegt und ausgerichtet werden und anschließend der Hohlkörper um das Zellelement herum gefügt werden. In einem letzten Schritt werden dann das Bodenelement und das Deckelelement angefügt.

Weiter bevorzugt weist das Verfahren die Schritte auf:
- Befüllen des fluiddichten Raums mit einem Elektrolyten durch eine Öffnung im quaderförmigen Gehäuseelement,
- Verschließen des befüllten im Wesentlichen fluiddichten Raums mittels eines Pins und/oder einer stoffschlüssigen Verbindung.

Ein Vorteil dieser Ausführungsform ist, dass trotz eines geschlossenen Deckelelements das Gehäuseelement befüllt werden kann, um somit die Fertigung zu verbessern.

Weiter bevorzugt weist das Verfahren ferner die Schritte auf:
- Reinigen und/oder Entgraten des Halbzeugs vor dem Ausrichten des ersten Seitenelements, des zweiten Seitenelements, des dritten Seitenelements und/oder des Bodenelements zum Grundelement, und/oder
- Reinigen und/oder Entgraten des Halbzeugs nach dem Fügen der Flächenelemente zum Gehäuseelement.

Ein Vorteil dieser Ausführungsform ist, dass das Gehäuseelement im Wesentlichen frei von Verunreinigung und ähnlichem ist, um somit eventuelle Kurzschlüsse durch das Elektrolyt oder ähnliches vermeiden zu können.

Ein weiterer Aspekt der Erfindung betrifft ein Verfahren zum Ausbilden eines Halbzeuges, wie voranstehend und nachfolgend beschrieben, aufweisend die Schritte:
- Bereitstellen eines Rohlings,
- Ausformen, insbesondere mittels Stanzen oder Wasser- oder Laserstrahlschneidens, des Halbzeugs aus dem Rohling, wobei das Halbzeug ein Grundelement, ein erstes Seitenelement, ein zweites Seitenelement, ein drittes Seitenelement, und insbesondere ein Bodenelement und/oder insbesondere ein Deckelelement aufweist, welche in einer Ebene angeordnet sind und dazu eingerichtet sind, zumindest teilweise ein Gehäuseelement auszubilden.

Ein Vorteil dieser Ausführungsform ist, dass aus dem Rohling sehr einfach die Geometrien des Halbzeugs angepasst werden können, um somit auf neue Zellkonzepte oder ähnliches verbessert reagieren zu können.

Ein weiterer Aspekt der Erfindung betrifft ein Gehäuseelement für eine Zelleinheit, welche ein Halbzeug, wie voranstehend und nachfolgend beschrieben, aufweist und/oder welches mittels des Verfahrens, wie voranstehend und nachfolgend beschrieben, ausgebildet wurde, und/oder eine Komponente aufweist, welche mittels des Verfahrens zum Ausbilden eines Halbzeugs ausgebildet wurde.

Ein weiterer Aspekt der Erfindung betrifft ein Fahrzeug und/oder einen stationären Speicher, aufweisend ein Halbzeug, wie voranstehend und nachfolgend beschrieben, ein Gehäuseelement, wie voranstehend und nachfolgend beschrieben, und/oder welches mittels des Verfahrens zum Ausbilden eines Gehäuseelements, wie voranstehend und nachfolgend beschrieben, hergestellt wurde, und/oder eine Komponente, welche mittels des Verfahrens zum Ausbilden eines Halbzeugs, wie voranstehend und nachfolgend beschrieben, hergestellt wurde.

Sämtliche Offenbarungen, welche voranstehend und nachfolgend in Bezug auf einen Aspekt der Erfindung beschrieben sind, gelten gleichermaßen für alle weiteren Aspekte der Erfindung.

Nachfolgend werden Ausführungsbeispiele der Erfindung unter Bezugnahme auf die begleitenden Zeichnungen im Detail beschrieben. In der Zeichnung ist:
- Fig. 1: ein Halbzeug gemäß einer ersten bevorzugten Ausführungsform,
- Fig. 2: ein Gehäuseelement der Ausführungsform von Fig. 1,
- Fig. 3: ein Halbzeug gemäß einer zweiten bevorzugten Ausführungsform,
- Fig. 4: ein Halbzeug gemäß einer dritten bevorzugten Ausführungsform,
- Fig. 5: ein Gehäuseelement gemäß der dritten Ausführungsform,
- Fig. 6: ein Flussdiagramm zur Illustration von Schritten des Verfahrens zum Ausbilden eines Halbzeugs gemäß einer Ausführungsform,
- Fig. 7: ein Halbzeug gemäß der dritten Ausführungsform,
- Fig. 8 und 9: ein Flussdiagramm zur Illustration von Schritten des Verfahrens zum Ausbilden eines Gehäuseelements gemäß einer Ausführungsform,
- Fig. 10: ein Fahrzeug,
- Fig. 11: ein stationärer Speicher

### Ausführungsformen der Erfindung

Die Figuren sind lediglich schematisch und nicht maßstabsgetreu. In den Figuren können gleiche, gleichwirkende oder ähnliche Elemente mit den gleichen Bezugszeichen verwendet werden.

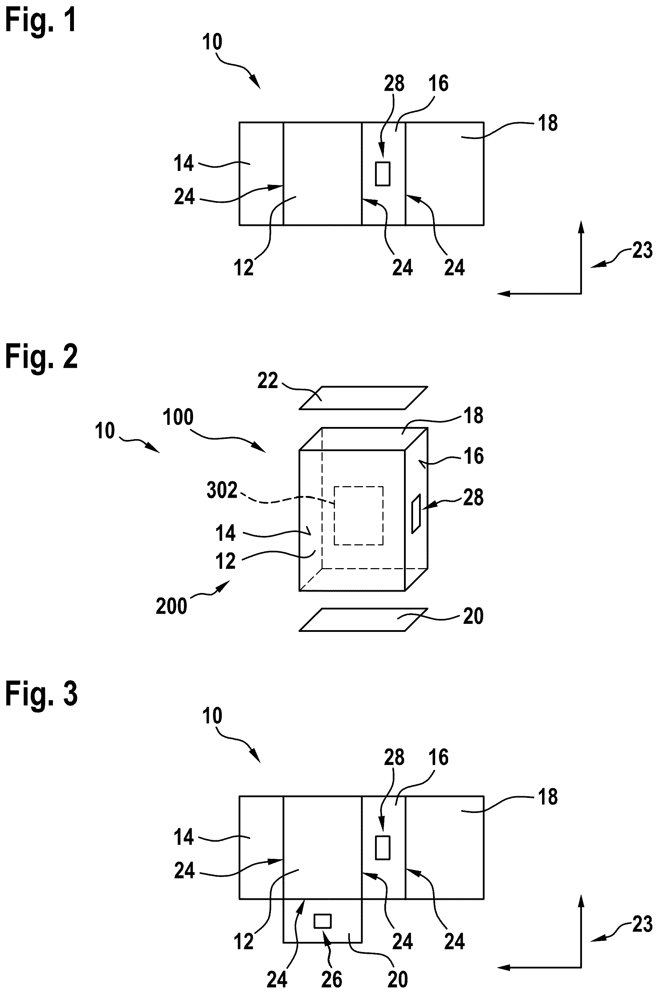

Die Figuren 1 und 2 zeigen ein Halbzeug 10 zum Ausbilden eines Gehäuseelements 100 einer Zelleinheit 200 gemäß einer ersten bevorzugten Ausführungsform.

Das Halbzeug 10 weist vier Flächenelemente in Rechteckform, nämlich ein Grundelement 12, ein erstes Seitenelement 14, ein zweites Seitenelement 16 und ein drittes Seitenelement 18 auf. Das erste Seitenelement 14 und das zweite Seitenelement 16 sind am Grundelement 12 an zwei aneinander gegenüberliegenden Seiten, insbesondere Längsseiten, angeordnet. Das dritte Seitenelement 18 ist an einer dem Grundelement 12 gegenüberliegenden Seite des zweiten Seitenelements 16 angeordnet.

Schematisch ist im zweiten Seitenelement 16 ein Berstelement 28 dargestellt.

Das Halbzeug 10 ist in einer Ebene 23 liegend, bspw. aus einem Blechmaterial hergestellt. Wie aus Figur 2 ersichtlich ist, kann aus dem Halbzeug 10 ein Gehäuseelement 100 geformt werden, welches zwei offene Seiten aufweist. Somit ist das Gehäuseelement 100 ein Quader mit zwei einander gegenüberliegenden Seiten.

Die beiden offenen Seiten können durch ein Bodenelement 20 und ein Deckelelement 22, welche separate Bauteile sind, verschlossen werden.

Somit weist das Gehäuseelement 100 der ersten Ausführungsform insgesamt sechs Flächenelemente auf, wobei das Bodenelement 20 und das Deckelelement 22 separate Elemente sind. Die anderen vier Elemente, nämlich das Grundelement, das erste, zweite und dritte Seitenelement sind zusammenhängend als Halbzeug 10 vorgesehen und werden dann durch Umformen und Fügen zum Hohlquader mit zwei einander gegenüberliegenden Öffnungen gebildet.

Im endmontierten Zustand bildet das Gehäuseelement 100 dann einen fluiddichten Raum, in welchem ein Zellelement 302, bspw. ein Stack, angeordnet werden kann.

Um die Umformvorgänge zu erleichtern, sind zwischen einander ankreuzenden Flachelementen Biegelinien 24 in das Halbzeug 10 eingeprägt. Die Biegelinien 24 können auch mittels anderer Verfahren, bspw. Materialabtrag hergestellt werden. Dadurch können insbesondere beim Umformvorgang Materialaufwürfe verhindert werden.

Das Verfahren zur Herstellung des Gehäuseelements 100 und der Zelleinheit 200 gemäß der ersten Ausführungsform ist dabei derart, dass aus einem Rohling das flächige, in einer Ebene liegende Halbzeug 10 hergestellt wird. Gleichzeitig oder anschließend können dann die Biegelinien 24 und gegebenenfalls weitere gewünschte Öffnungen zur Befüllung und/oder zur Aufnahme von elektrischen Terminals und/oder zur Aufnahme von Berstelementen eingebracht werden. In einem nächsten Schritt erfolgt dann durch Umformen entlang der Biegelinien 24 die Herstellung des Kreiselements 100. In einem Fügeschritt werden dann die beiden freien Kanten an den Längsseiten des ersten Seitenelements 14 und des dritten Seitenelements 18 miteinander verbunden. Dadurch entsteht, wie in Fig. 2 angedeutet, das quaderförmige Gehäuseelement 100 mit zwei einander gegenüberliegenden offenen Seiten. Die beiden offenen Seiten können dann durch separate, flächige Elemente, nämlich das Bodenelement 20 und das Deckelelement 22 verschlossen werden.

Vorher muss noch ein Zellelement 302, bspw. ein Stack, in den Aufnahmeraum des Gehäuseelements 100 eingebracht werden. Dies kann auf zweierlei Weise durchgeführt werden. Das Zellelement 302 kann nach Herstellen des quaderförmigen, an beiden Seiten offenen Gehäuseelements einfach in das Gehäuseelement eingeschoben werden und dann das Bodenelement 20 und das Deckelelement 22 fixiert werden.

Alternativ kann auch schon vor dem Einbringen des Zellelements das Bodenelement 20 fixiert werden und dann das Zellelement durch den verbliebenen offenen Bereich am Gehäuseelement 100 eingebracht werden. Dann erst wird das Gehäuseelement 100 durch das Deckelelement 22 verschlossen.

Weiter alternativ kann das Zellelement 302 am flachen Halbzeug 10 bspw. auf der Grundfläche 12 angeordnet werden und dann das Halbzeug 10 zum an zwei Seiten offenen, quaderförmigen Gehäuseelement 100 umgeformt und gefügt werden. Hierbei muss darauf geachtet werden, dass beim Fügevorgang, bspw. einem Schweißvorgang, keine Beschädigung des innen angeordneten Zellelements auftritt. Anschließend werden dann das Bodenelement 20 und das Deckelelement 22 fixiert.

Zu allen Alternativen wird dann in einem letzten Schritt eine Befüllung des fluiddicht abgeschlossenen Gehäuseelements 100 mit einem Elektrolyten durch eine Befüllöffnung (nicht gezeigt) durchgeführt.

Somit kann ein aus einem flachen Halbzeug faltbares Gehäuseelement hergestellt werden, welches insbesondere an einem gewünschten Ort transportiert werden kann und somit einen deutlich reduzierten Transportraum im Vergleich mit vorab hergestellten Gehäuseelementen einnimmt.

Figur 3 zeigt ein Halbzeug 10 gemäß einer zweiten Ausführungsform der Erfindung. Die zweite Ausführungsform entspricht im Wesentlichen der ersten Ausführungsform, wobei am Grundelement 12 zusätzlich noch an einer freien Seite ein Bodenelement 20 angeordnet ist. Alle Flächenelemente des Halbzeugs 10 vom Figur 3 sind dabei wiederrum in einer Ebene 23 angeordnet. Am Bodenelement 20 ist zusätzlich noch ein Kontaktierungselement 26, bspw. ein Terminal oder zumindest eine Öffnung für ein Terminal vorgesehen. Somit ist am Halbzeug auch das Bodenelement 20 integriert. Dadurch kann insbesondere ein Gehäuseelement 100 hergestellt werden, welches schon einen geschlossenen Boden aufweist. Das Gehäuseelement weist dann lediglich noch eine Öffnung auf, auf welcher später dann das Deckelelement 22 fixiert wird. Entsprechend dem voranstehend beschriebenen Verfahren kann ein Zellelement 302 entweder in das umgeformte und gefügte Gehäuseelement 100 eingebracht werden oder vorab auf das Grundelement 12 gelegt werden und der Umform- und Fügevorgang anschließend um das Zellelement 302 herum ausgeführt werden.

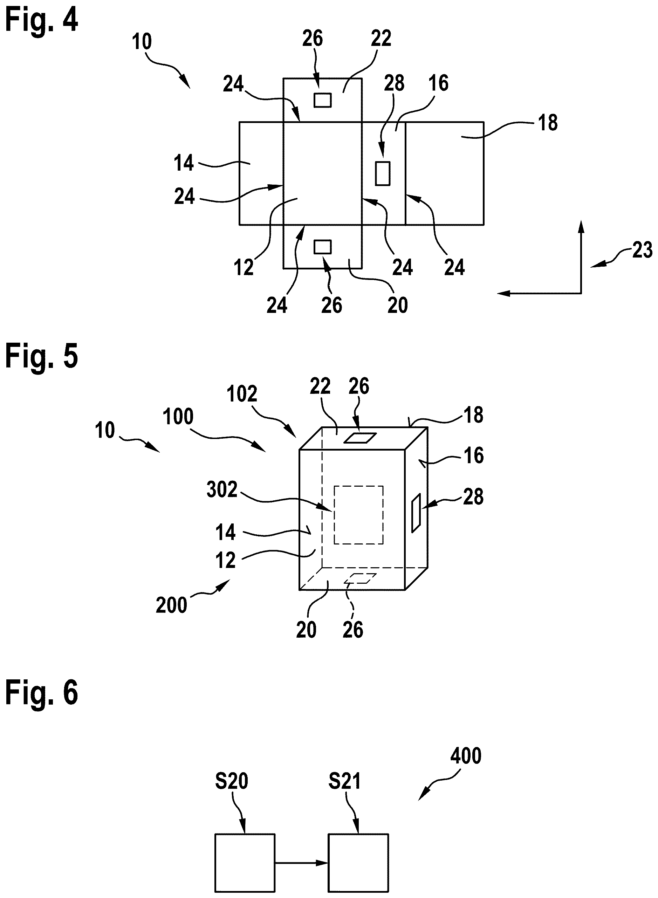

Figur 4 zeigt ein Halbzeug 10 zum Ausbilden eines Gehäuseelements 100 einer Zelleinheit 200 gemäß einer dritten Ausführungsform. Das Halbzeug 10 weist ein Grundelement 12, ein erstes Seitenelement 14, ein zweites Seitenelement 16, ein drittes Seitenelement 18 und ein Bodenelement 20, und ein Deckelelement 22 auf. Weiter sind das erste Seitenelement 14, das zweite Seitenelement 16, das Deckelelement 22 und das Bodenelement 20 am Grundelement 12 angeordnet und sind dazu eingerichtet, mit dem Grundelement 12 einen, fluiddichten Raum, auszubilden, in welchem ein Zellelement 302 anordenbar ist, wobei das Grundelement 12, das erste Seitenelement 14, das zweite Seitenelement 16, das dritte Seitenelement 18, das Bodenelement 20 und das Deckelelement 22 in einer Ebene 23 angeordnet sind.

Bevorzugt kann im Grundelement 12, im ersten Seitenelement 14, im zweiten Seitenelement 16, im dritten Seitenelement 18, im Bodenelement 20 und/oder im Deckelelement 22 jeweils ein Kontaktierungselement 26 und/oder ein Berstelement 28 angeordnet sein. Das Berstelement 28 kann bevorzugt eingerichtet sein, den Abfluss eines Fluides aus dem im Wesentlichen fluiddichten Raum freizugeben, wenn eine vorbestimmte Temperatur und/oder ein vorbestimmter Druck im Gehäuseelement 100 überschritten wird. Bevorzugt kann an allen Übergängen des Halbzeugs 10 eine Biegelinie 24 angeordnet sein. Beispielsweise kann zwischen dem Grundelement 12 und dem ersten Seitenelement 14, dem Grundelement 12 und dem zweiten Seitenelement 16, dem Grundelement 12 und dem Bodenelement 20, dem Grundelement 16, dem Deckelelement 22 und/oder zwischen dem zweiten Seitenelement 20 und dem dritten Seitenelement 18 jeweils eine Biegelinie 24 angeordnet sein.

Figur 5 zeigt eine Zelleinheit 200 gemäß der dritten Ausführungsform. Die Zelleinheit 200 weist bevorzugt ein Gehäuseelement 100 auf. Das Gehäuseelement 100 kann insbesondere mittels eines Halbzeuges 10, wie voranstehend und nachfolgend beschrieben, ausgebildet sein, wobei innerhalb des Gehäuseelements 100 ein Zellelement 302 angeordnet ist. Bevorzugt kann im Deckelelement 22 und am Bodenelement 20 ein Kontaktierungselement 26 angeordnet sein, welches dazu eingerichtet ist, elektrische Energie, wie beispielsweise vom Zellelement 302, an einer Innenseite des im Wesentlichen fluiddichten Raums des Gehäuseelements 100 an eine Außenseite des Gehäuseelements 100 zu leiten.

Figur 6 zeigt ein Flussdiagramm zur Illustration von Schritten des Verfahrens 400 zum Ausbilden eines Halbzeugs 10, wie voranstehend und nachfolgend beschrieben. Das Verfahren 400 weist die Schritte auf:
- Bereitstellen S20 eines Rohlings,
- Ausformen S21, insbesondere mittels Laserstrahlschneidens oder Stanzen, des Halbzeugs 10 aus dem Rohling, wobei das Halbzeug 10 ein Grundelement 12, ein erstes Seitenelement 14, ein zweites Seitenelement 16, ein drittes Seitenelement 18, ein Bodenelement 20 und ein Deckelelement 22 aufweist, welche in einer Ebene 23 angeordnet sind, und dazu eingerichtet sind, zumindest teilweise, ein Gehäuseelement 100 auszubilden.

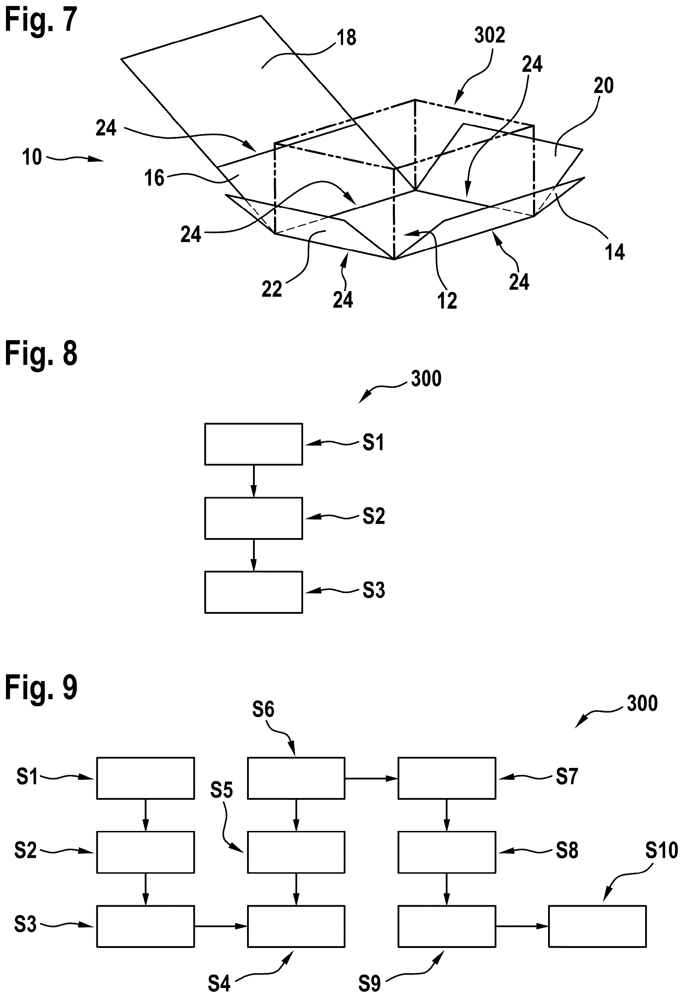

Figur 7 zeigt ein Halbzeug 10 gemäß einer Ausführungsform. Das Halbzeug 10 weist bevorzugt eine flächenmäßig größte Grundplatte 12 auf. Auf der Grundplatte 12 kann ein Zellelement 302 angeordnet sein. Um die Grundplatte 12 herum sind insbesondere ein erstes Seitenelement 14, ein zweites Seitenelement 16, ein Deckelelement 22, sowie ein Bodenelement 20 angeordnet. Diese Elemente können ungeformt insbesondere an dem Zellelement 302 anliegen. Am zweiten Verbindungselement 16 ist bevorzugt als Deckel das dritte Seitenelement 18 angeordnet, welches, wenn das Zellelement 302 im Gehäuseelement 100 angeordnet ist, dieses verschließen kann.

Figur 8 zeigt ein Flussdiagramm zur Illustration von Schritten des Verfahrens 300 zum Ausbilden eines Gehäuseelements 100 mittels eines Halbzeugs 10, wie voranstehend und nachfolgend beschrieben, gemäß einer Ausführungsform. Das Verfahren 300 weist die Schritte auf:
- Bereitstellen S1 eines Halbzeugs 10 mit einem Grundelement 12, einem ersten Seitenelement 14, einem zweiten Seitenelement 16, einem dritten Seitenelement 18, einem Bodenelement 20 und einem Deckelelement 22,
- Ausrichten S2 des ersten Seitenelements 14, des zweiten Seitenelements 16, des dritten Seitenelements 18 und des Bodenelements 20 zum Grundelement 12,
- Fügen S3 des ersten Seitenelements 14 mit dem zweiten Seitenelement 16 und mit dem dritten Seitenelement 18 und des Bodenelements 20 mit dem ersten Seitenelement 14, dem zweiten Seitenelement 16 und mit dem dritten Seitenelement 18.

Figur 9 zeigt ein Flussdiagramm zur Illustration von Schritten des Verfahrens 300 zum Ausbilden eines Gehäuseelements 100 mittels eines Halbzeugs 10, wie voranstehend und nachfolgend beschrieben, gemäß einer Ausführungsform. Das Verfahren 300 weist bevorzugt die gleichen Schritte S1 bis S3 auf, wie diese bereits hinsichtlich in der Figur 8 erläutert wurden. Weiter bevorzugt weist das Verfahren 300 ferner die Schritte auf Anordnen S4 eines Zellelements 302, Ausrichten S5 des Deckelelements 22, und Fügen S6 des Deckelelements 22. Weiter bevorzugt weist das Verfahren 300 ferner die Schritte auf Befüllen S7 des fluiddichten Raums, und Verschließen S8 des fluiddichten Raums. Weiter bevorzugt weist das Verfahren 300 ferner die Schritte auf Reinigen und/oder Entgraten S9 des Halbzeugs 10 vor dem Ausrichten S2 und/oder den Schritt Reinigen und/oder Entgraten S10 des Halbzeugs 10 nach dem Fügen S3.

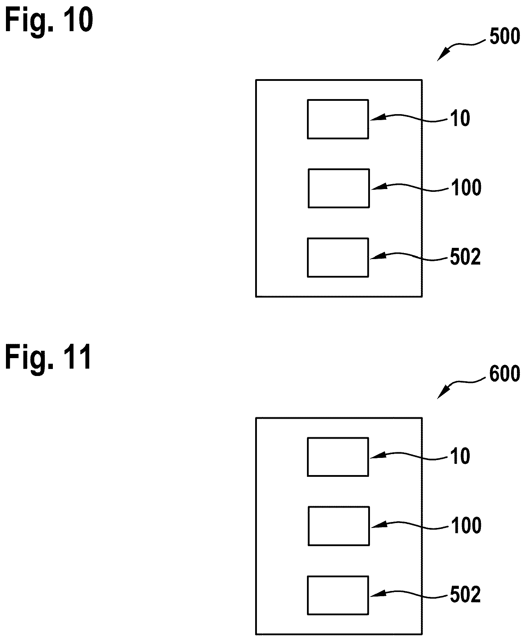

Figur 10 zeigt ein Fahrzeug 500 gemäß einer Ausführungsform. Das Fahrzeug 500 weist bevorzugt ein Halbzeug 10, wie voranstehend und nachfolgend beschrieben, auf, ein Gehäuseelement 100 auf, wie voranstehend und nachfolgend beschrieben, und/oder ein Gehäuseelement 100, welches mittels des Verfahrens 300 zum Ausbilden eines Gehäuseelements 100, wie voranstehend und nachfolgend beschrieben, ausgebildet wurde, und/oder eine Komponente 502 auf, welche mittels des Verfahrens 400 zum Ausbilden eines Halbzeugs 10, wie voranstehend und nachfolgend beschrieben, hergestellt wurde.

Figur 11 zeigt einen stationären Speicher 600 aufweisend ein Halbzeug 10, wie voranstehend und nachfolgend beschrieben, ein Gehäuseelement 100, wie voranstehend und nachfolgend beschrieben, und/oder welches mittels des Verfahrens 300 zum Ausbilden eines Gehäuseelements 100, wie voranstehend und nachfolgend beschrieben, hergestellt wurde, und/oder eine Komponente 502, welche mittels des Verfahrens 400 zum Ausbilden eines Halbzeugs 10, wie voranstehend und nachfolgend beschrieben, hergestellt wurde.

## Patentansprüche

1. Halbzeug zum Ausbilden eines Gehäuseelements (100) einer Zelleinheit (200), aufweisend:
- ein Grundelement (12) und
- ein erstes Seitenelement (14), ein zweites Seitenelement (16), und ein drittes Seitenelement (18),
- wobei das erste Seitenelement (14) und das zweite Seitenelement (16) am Grundelement (12) an einander gegenüberliegenden Seiten angeordnet sind, und das dritte Seitenelement (18) am zweiten Seitenelement (16) an einer zum Grundelement (12) gegenüberliegenden Seite angeordnet ist,
- wobei das Grundelement (12), das erste Seitenelement (14), das zweite Seitenelement (16) und das dritte Seitenelement (18) in einer Ebene (23) angeordnet sind und
- wobei das Grundelement (12), das erste Seitenelement (14), das zweite Seitenelement (16) und das dritte Seitenelement (18) eingerichtet sind, einen umfänglich geschlossenen, fluiddichten Hauptkörper zu bilden, in welchem ein Zellelement (302) der Zelleinheit anordenbar ist.

2. Halbzeug nach Anspruch 1, ferner umfassend ein Bodenelement (20), welches am Grundelement (12) angeordnet ist, wobei das Grundelement (12), das erste Seitenelement (14), das zweite Seitenelement (16), das dritte Seitenelement (18) und das Bodenelement (20) eingerichtet sind, einen umfänglich geschlossenen, fluiddichten Hauptkörper zu bilden, in dem ein Zellelement (302) der Zelleinheit anordenbar ist.

3. Halbzeug nach Anspruch 2, ferner umfassend ein Deckelelement (22), welches am Grundelement (12) gegenüber dem Bodenelement (20) angeordnet ist, wobei das Grundelement (12), das erste Seitenelement (14), das zweite Seitenelement (16), das dritte Seitenelement (18), das Bodenelement (20) und das Deckelelement (22) eingerichtet sind, einen umfänglich geschlossenen, fluiddichten Hauptkörper zu bilden, in dem ein Zellelement (302) der Zelleinheit anordenbar ist.

4. Halbzeug nach einem der vorherigen Ansprüche, wobei zwischen dem Grundelement (12) und dem ersten Seitenelement (14), dem Grundelement (12) und dem zweiten Seitenelement (16), dem zweiten Seitenelement (16) und dem dritten Seitenelement (18) und/oder zwischen dem Grundelement (12) und dem Bodenelement (20) und/oder zwischen dem Grundelement (12) und dem Deckelelement (22) jeweils eine Biegelinie (24) angeordnet ist.

5. Halbzeug, nach einem der vorherigen Ansprüche, wobei im ersten Seitenelement (14), im zweiten Seitenelement (16), im dritten Seitenelement (18) und/oder dem Grundelement (12) und/oder dem Bodenelement (20) und/oder dem Deckelelement (22) ein Kontaktierungselement (26) angeordnet ist, welches dazu eingerichtet ist, elektrische Energie von einer Innenseite des im Wesentlichen fluiddichten Raums an eine Außenseite des Gehäuseelements (100) zu leiten.

6. Halbzeug (10) nach einem der vorherigen Ansprüche, wobei das Grundelement (12), das erste Seitenelement (14), das zweite Seitenelement (16), das dritte Seitenelement (18), das Bodenelement (20), und/oder das Deckelelement (22) eine Befüllöffnung zur Befüllung mit einem Elektrolyt und/oder ein Berstelement (28) aufweist, welches dazu eingerichtet ist, einen Abfluss eines Fluides aus dem im Wesentlichen fluiddichten Raum freizugeben, wenn eine vorbestimmte Temperatur und/oder ein vorbestimmter Druck im Gehäuseelement (100) überschritten wird.

7. Verfahren (300) zum Ausbilden eines Gehäuseelements (100) mittels eines Halbzeugs (10) nach einem der Ansprüche 1 bis 6, aufweisend die Schritte:
- Bereitstellen (S1) des Halbzeugs (10) mit einem Grundelement (12), einem ersten Seitenelement (14), einem zweiten Seitenelement (16) und einem dritten Seitenelement (18),
- Ausrichten (S2) des ersten Seitenelements (14), des zweiten Seitenelements (16), des dritten Seitenelements (18) zum Grundelement (12), und
- Fügen (S3) des ersten Seitenelementes (14) mit dem dritten Seitenelement (18) zu einem Hohlkörper mit offenem Boden und Deckel.

8. Verfahren nach Anspruch 7, wobei das Halbzeug (10) ferner ein Bodenelement (20) aufweist, welches zum Grundelement (12) ausgerichtet wird und mit dem Hohlkörper gefügt wird, um einen Hohlkörper mit geschlossenem Boden herzustellen.

9. Verfahren nach Anspruch 8, wobei das Halbzeug (10) ferner ein Deckelelement (22) aufweist, welches zum Grundelement (12) ausgerichtet wird und mit dem Hohlkörper gefügt wird, um einen Hohlkörper mit geschlossenem Deckel herzustellen.

10. Verfahren nach einem der Ansprüche 7 bis 9, wobei vor dem Schritt des Ausrichtens ein Zellelement (302) auf dem Grundelement (12) angeordnet wird.

11. Verfahren nach einem der Ansprüche 7 bis 9, wobei nach dem Schritt des Fügens das Zellelement (302) im Hohlkörper angeordnet wird.

12. Verfahren nach Anspruch 11, wobei anschließend das Deckelelement (22) an den Hohlkörper gefügt wird.
